# FASCICULE DE BREVET EUROPEEN

(11) **EP 1 040 619 B1**
(45) Date de publication et mention de la délivrance du brevet: **06.06.2007**
(21) Numéro de dépôt: 98959987.3
(22) Date de dépôt: 15.12.1998
(51) Int. Cl.: H04L 9/32

(54) **DISPOSITIF D'AUTHENTIFICATION D'IMAGES NUMERIQUES**
VORRICHTUNG ZUM AUTHENTIFIZIEREN VON DIGITALEN ABBILDUNGEN
DEVICE FOR AUTHENTICATING DIGITAL IMAGES

(30) Priorité: 17.12.1997 FR 9716008
(43) Date de publication de la demande: 04.10.2000
(73) Titulaire: THOMSON multimedia, 92100 Boulogne Billancourt (FR)
(72) Inventeur: Chevreau, Sylvain, Thomson multimédia, 92648 Boulogne Cedex (FR); Meunier, Paul-Louis, Thomson multimédia, 92648 Boulogne Cedex (FR); Boyer, Robert, Thomson multimédia, 92648 Boulogne Cedex (FR); Staron, Alain, Thomson multimédia, 92648 Boulogne Cedex (FR)
(74) Mandataire: Ruellan-Lemonnier, Brigitte
(86) Numéro de dépôt international: PCT/FR1998/002730
(87) Numéro de publication internationale: WO 1999/031844

(56) Documents cités:
- EP-A- 0 383 985
- EP-A- 0 752 786
- US-A- 5 499 294

## Description

La présente invention concerne un dispositif d'authentification de données numériques.

L'invention s'applique plus particulièrement à l'authentification d'images numériques issues d'un appareil de prise de vues tel que, par exemple, une tête de caméra ou un appareil photographique.

Les images numériques sont des images falsifiables. Ainsi en est-il, par exemple, des images numériques constituant un reportage d'actualités ou une émission de télévision, que ces images soient diffusées en direct ou à partir d'une source de données enregistrées.

Lés personnes à qui sont transmises des images numériques se trouvent donc dans une situation où l'authenticité des informations qu'elles reçoivent n'est pas garantie. Cet inconvénient est d'autant plus important que se multiplient les sources d'informations telles que, par exemple, les sources d'informations provenant de journalistes communément appelés journalistes "free-lances". Pour éviter cet inconvénient, on a proposé, notamment dans le brevet US 5,499,294, des procédés d'authentification d'images numériques. Ces procédés permettent d'authentifier l'appareil de prises de vues lui-même mais pas le journaliste ou le caméraman.

L'invention a pour but de remédier à cet inconvénient.

La présente invention concerne un dispositif pour authentifier la prise de vues d'images constituées de données numériques comprenant un appareil de prise de vues et un élément de sécurité réalisant la signature d'au moins une partie des données numériques, caractérisé en ce que l'élément de sécurité est un élément détachable comprenant un circuit de déchiffrement à clé secrète K1, l'élément détachable et la clé secréte K1 associée étant propres à un utilisateur, cet élément étant connecté à l'appareil de prise de vues par un circuit d'interface prévu dans l'appareil de prise de vues.

D'autres avantages et caractéristiques de l'invention apparaîtront à la lecture d'un mode de réalisation préférentiel fait en référence aux figures ci-annexées parmi lesquelles :
- la figure 1 représente un premier dispositif de prise de vues permettant l'authentification d'images numériques selon le mode de réalisation préférentiel de l'invention ;
- la figure 2 représente un deuxième dispositif de prise de vues permettant l'authentification d'images numériques selon le mode de réalisation préférentiel de l'invention ;
- la figure 3 représente, selon l'invention, un dispositif d'authentification d'images numériques issues d'un dispositif de prise de vues tel que celui représenté en figure 1 ou en figure 2.

Sur toutes les figures, les mêmes repères désignent les mêmes éléments.

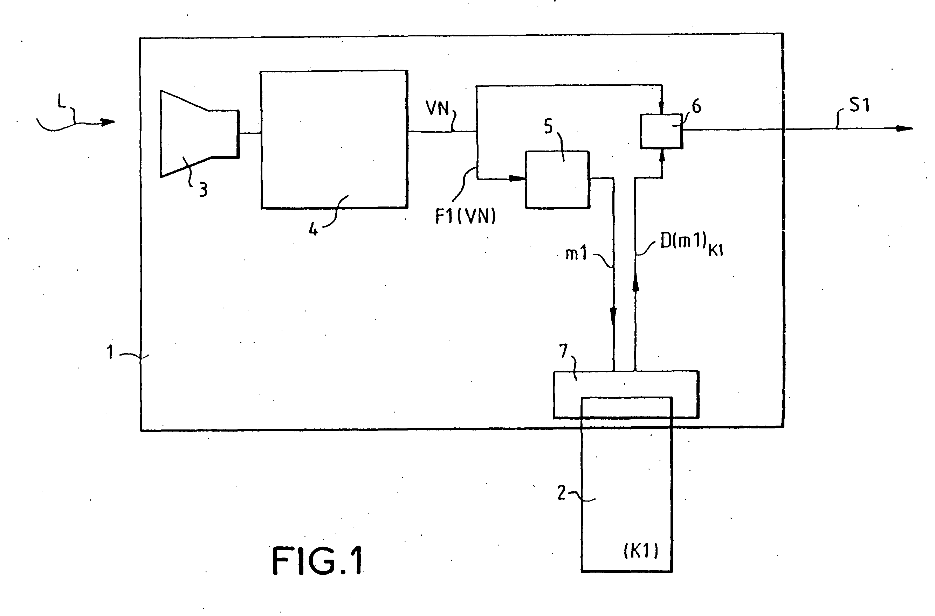

La figure 1 représente un premier dispositif de prise de vues permettant l'authentification d'images numériques selon le mode de réalisation préférentiel de l'invention.

Le dispositif de prise de vues est constitué d'un appareil de prise de vues 1 et d'un élément de sécurité détachable 2. L'appareil de prise de vues 1 peut être, par exemple, une tête de caméra ou un appareil photographique. Selon le mode de réalisation préférentiel de l'invention, l'élément de sécurité détachable est une carte à puce.

L'appareil de prise de vues 1 comprend un objectif 3, un bloc 4 de circuits de traitement du signal issu de l'objectif 3, un circuit de hachage 5, un multiplexeur 6 et un circuit 7 d'interface avec la carte à puce.

De façon connue en soi, l'objectif 3 et le bloc 4 de circuits de traitement permettent de transformer un signal lumineux L en un signal numérique VN.

Selon l'invention, une fraction F1(VN) du signal numérique VN est prélevée, préférentiellement de façon régulière, en sortie du bloc 4. Chaque fraction F1(VN) prélevée est transmise au circuit de hachage 5. Le circuit 5 peut être un circuit électronique ou un élément logiciel. A titre d'exemples non limitatifs, la fraction F1(VN) du signal numérique VN peut être composée des lignes paires ou impaires d'une même image ou des données relatives à la composante de luminance d'une même image. La fraction F1(VN) peut également être constituée de plusieurs trames prélevées à intervalles de temps réguliers dans le cas d'une tête de caméra ou image par image dans le cas d'un appareil photo. De façon générale, la donnée F1(VN) est composée de données significatives d'une image.

Le résultat m1 issu de la fonction de hachage du signal F1 (VN) est transmis au circuit d'interface 7. La donnée m1 comprend, par exemple, quelques dizaines de bits.

Le circuit d'interface 7 permet le transfert bidirectionnel de données entre l'appareil 1 et la carte à puce 2. De façon préférentielle, le circuit 7 est un circuit d'interface série bidirectionnel au standard ISO-7816.

La carte à puce contient un circuit de déchiffrement (non représenté sur la figure) ainsi qu'une clé secrète K1. De façon préférentielle, la clé K1 est stockée dans une mémoire programmable contenue dans la carte 2. Sous l'action de la clé K1, les données m1 successives transmises à la carte 2 sont déchiffrées par le circuit de déchiffrement de façon à constituer une suite de données D(m1)_{K1}. Chaque donnée D(m1)_{K1} constitue la signature de la donnée m1 et donc de la fraction F1(VN) d'où est issue la donnée m1.

Par l'intermédiaire du circuit d'interface 7, les données D(m1)_{K1} sont transmises de la carte à puce 2 vers une première entrée du multiplexeur 6 qui reçoit, par ailleurs, le signal numérique VN sur une deuxième de ses entrées.

Le signal S1 issu du multiplexeur 6 est alors composé des données numériques VN et des données D(m1)_{K1}. De façon préférentielle, chaque donnée D(m1)_{K1} est insérée dans un en-tête associé à la fraction de donnée F1(VN) qui lui correspond. Selon un autre mode de réalisation de l'invention, les données D(m1)_{K1} sont substituées à certaines des données VN qui sont alors perdues.

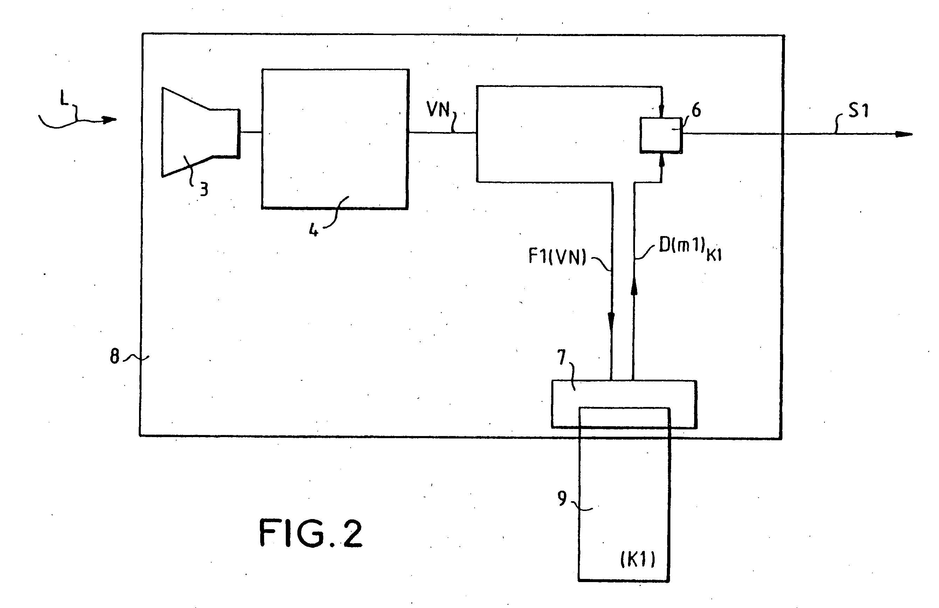

La figure 2 représente un deuxième dispositif de prise de vues permettant l'authentification d'images numériques selon le mode de réalisation préférentiel de l'invention.

Le dispositif de prise de vues est constitué d'un appareil de prise de vues 8 et d'un élément de sécurité détachable 9, par exemple, une carte à puce. L'appareil 8 peut être, par exemple, une tête de caméra ou un appareil photographique. L'appareil 8 contient les mêmes circuits que l'appareil 1 décrit à la figure 1 à l'exception du circuit de hachage 5.

Selon le mode de réalisation de la figure 2, la fonction de hachage est réalisée dans la carte à puce 9. Il s'ensuit que la fraction F1(VN) du signal numérique VN est transmise à la carte à puce 9.

De même que mentionné ci-dessus, le hachage de la donnée F1(VN) génère une donnée m1 qui, déchiffrée, génère une donnée D(m1)_{K1}. Par l'intermédiaire du circuit d'interface 7 les données successives D(m1)_{K1} sont transmises de la carte à puce 9 vers le multiplexeur 6. Le signal S1 issu de l'appareil de prise de vues 8 est alors généré comme mentionné précédemment.

Un dispositif de prise de vues selon l'invention fonctionne avec des clés de déchiffrement K1 ayant des valeurs différentes. Une même clé K1 peut alors être propre à une seule personne ou à un ensemble de personnes constituant, par exemple, un groupement de journalistes. Il s'ensuit qu'un avantage de l'invention est de garantir la provenance des images authentifiées.

Conformément à l'invention, la carte à puce assure une fonction de clé personnelle dont la clé est secrète. D'autre part, l'utilisation d'une carte à puce implique que soit mis en oeuvre un processus d'identification mutuelle entre la carte à puce et le dispositif récepteur de la carte à puce, à savoir l'appareil de prise de vues. Il s'ensuit que le niveau de sécurité relatif aux différentes étapes mises en oeuvre dans la carte à puce et le dispositif de prise de vues est un niveau de sécurité élevé.

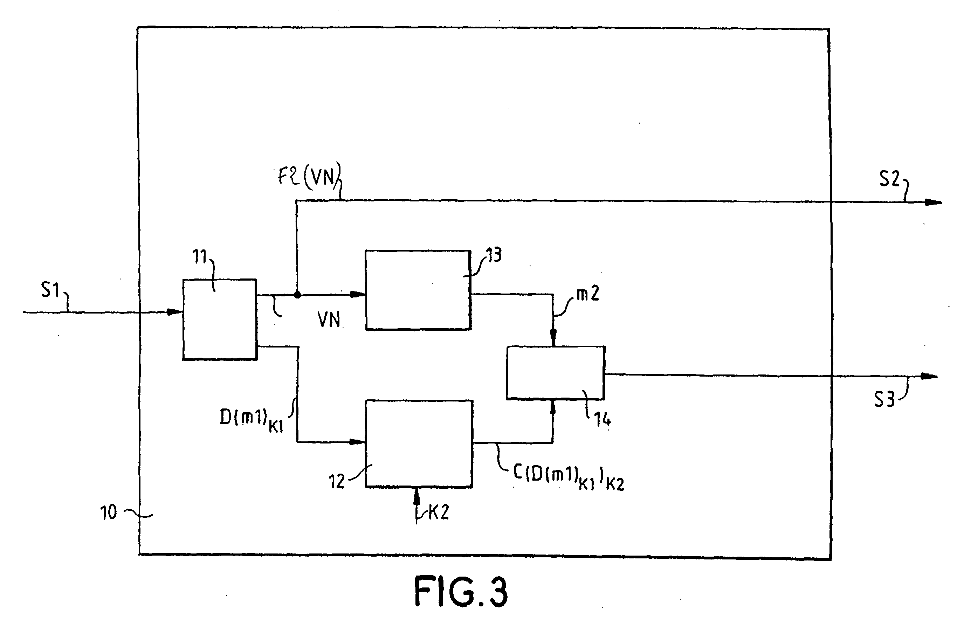

La figure 3 représente, selon l'invention, un dispositif d'authentification d'images numériques issues d'un dispositif de prise de vues tel que celui représenté en figure 1 ou en figure 2.

Le dispositif 10 d'authentification d'images numériques comprend un démultiplexeur 11, un circuit 12 de chiffrement à clé publique K2, un circuit 13 de hachage et un comparateur 14. Le démultiplexeur 11 reçoit sur son entrée un signal S1 tel que celui mentionné aux figures 1 et 2. Le signal S1 provient soit d'un dispositif de prise de vues tel que celui décrit aux figures 1 et 2, soit d'une source de données enregistrées telle que, par exemple, une bande magnétique, un disque vidéo numérique ou encore une disquette.

Le démultiplexeur 11 a pour fonction de séparer les données D(m1)_{K1} des données numériques VN. Les données D(m1)_{K1} sont transmises au circuit 12 de chiffrement à clé publique K2.

L'opération de chiffrement à clé publique K2 d'une donnée D(m1)_{K1} conduit à calculer une donnée chiffrée C(D(M1)_{K1})_{K2}.

Selon l'invention, des fractions F2(VN) du signal numérique VN sont prélevées en sortie du démultiplexeur 11. Le prélèvement des fractions F2(VN) s'effectue à l'image du prélèvement des fractions F1(VN). Ainsi, chaque fraction F2(VN) correspond-elle à une fraction F1(VN) et les données qui sont contenues dans la fraction F2(VN) qui correspond à la fraction F1 (VN) sont des données de même type que les données contenues dans la fraction F1(VN). Par "données de même type", il faut entendre que les données qui constituent la fraction F2(VN) sont des données a priori identiques aux données qui constituent la fraction F1(VN) qui lui correspond les données sont identiques si la fraction F1(VN) n'a pas été falsifiée et différentes, en tout ou partie, si la fraction F1(VN) a été falsifiée.

Dans tous les cas, les données contenues dans une fraction F2(VN) représentent le même signal que les données contenues dans la fraction F1(VN) qui lui correspond. Ainsi, par exemple, si les données contenues dans une fraction F1(VN) sont constituées des lignes paires d'une image, les données contenues dans la fraction F2(VN) qui correspond à la fraction F1(VN) sont-elles constituées des lignes paires de la même image.

Le circuit 13 opère le hachage des données contenues dans les fractions F2(VN). L'opération de hachage effectuée par le circuit 13 est identique à celle effectuée par le circuit 5. Il s'ensuit que la donnée m2 qui est associée à une fraction F2(VN) correspondant à une fraction F1(VN) est identique à la donnée m1 qui est associée à la fraction F1(VN) si la fraction F1(VN) n'a pas été falsifiée. La donnée m2 issue du circuit 13 et la donnée C(D(m1)_{K1})_{K2} sont transmises au comparateur 14.

Le signal S3 issu du comparateur 14 permet alors d'indiquer si les données numériques VN sont des données authentiques ou des données falsifiées : ce sont des données pouvant être considérées comme authentiques si chaque donnée m2 est égale à la donnée C(D(m1)_{K1})_{K2} qui lui correspond, ce sont des données dont on sait qu'elles ont été falsifiées si au moins une donnée m2 est différente de la donnée C(D(m1)_{K1})_{K2} qui lui correspond.

Selon l'invention, le dispositif 10 d'authentification d'images peut être intégré dans une unité de contrôle recevant des images filmées par une tête de caméra.

## Revendications

1. Dispositif pour authentifier la prise de vues d'images constituées de données numériques comprenant un appareil de prise de vues (1,8) et un élément de sécurité réalisant la signature d'au moins une partie des données numériques, **caractérisé en ce que** l'élément de sécurité est un élément détachable (2,9) comprenant un circuit de déchiffrement à clé secrète K1, l'élément détachable (2,9) et la clé secrète K1 associée étant propres à un utilisateur, cet élément se connectant à l'appareil de prise de vues par un circuit d'interface (7) prévu dans l'appareil de prise de vues.

2. Dispositif selon la revendication 1, **caractérisé en ce que** l'élément détachable (2,9) intègre un circuit de hachage.

3. Dispositif selon l'une des revendications 1 et 2, **caractérisé en ce que** l'élément détachable (2,9) est une carte à puce.

4. Dispositif selon les revendications 1 et 3, **caractérisé en ce que** l'appareil (1) de prise de vues comporte de plus un circuit de multiplexage (6) et un circuit de hachage (5) d'au moins une première fraction (F1 (VN)) des données numériques de façon à générer une première donnée hachée (m1), le circuit de déchiffrement à clé secrète K1 de la carte à puce (2) réalisant le déchiffrement de la première donnée hachée (m1) de façon à générer une signature (D(m1)_{K1}) de la première donnée hachée (m1), la signature (D(m1)_{K1}) et les données numériques (VN) étant transmises au circuit de multiplexage (6) de façon à constituer un signal multiplexé (S1).

5. Dispositif selon les revendications 2 et 3, **caractérisé en ce que** l'appareil (1) de prise de vues comporte de plus un circuit de multiplexage (6), un circuit de hachage de la carte à puce réalisant le hachage d'au moins une première fraction (F1(VN)) des données numériques provenant de l'appareil de prise de vues (8) de façon à générer une première donnée hachée (m1) et la première donnée hachée (m1) est déchiffrée dans le circuit de déchiffrement de façon à générer une signature (D(m1)_{K1}) de la première donnée hachée (m1), la signature (D(m1)_{K1}) issue de la carte à puce et les données numériques (VN) étant transmises au circuit de multiplexage (6) de façon à constituer un signal multiplexé (S1).

6. Dispositif selon les revendications 1 à 5, **caractérisé en ce que** l'appareil (1, 8) de prise de vues est une tête de caméra.

7. Dispositif selon les revendications 1 à 5, **caractérisé en ce que** l'appareil (1, 8) de prise de vues est un appareil photographique.

## Claims

1. Device for authenticating the taking of pictures made up of digital data comprising a picture taking apparatus (1, 8) and a security element carrying out the signing of at least part of the digital data, **characterized in that** the security element is a detachable element (2, 9) comprising a decryption circuit with secret key K1, the detachable element (2, 9) and the associated secret key K1 being specific to a user, this element connecting up to the picture taking apparatus by an interface circuit (7) provided in the picture taking apparatus.

2. Device according to Claim 1, **characterized in that** the detachable element (2, 9) incorporates a hashing circuit.

3. Device according to either of Claims 1 and 2, **characterized in that** the detachable element (2, 9) is a chip card.

4. Device according to Claims 1 and 3, **characterized in that** the picture taking apparatus (1) moreover comprises a multiplexing circuit (6) and a circuit (5) for hashing at least one first fraction (F1 (VN)) of the digital data in such a way as to generate a first hashed datum (m1), the decryption circuit with secret key K1 of the chip card (2) carrying out the decryption of the first hashed datum (m1) in such a way as to generate a signature (D(m1)_{K1}) of the first hashed datum (m1), the signature (D(m1)_{K1}) and the digital data (VN) being transmitted to the multiplexing circuit (6) so as to constitute a multiplexed signal (S1).

5. Device according to Claims 2 and 3, **characterized in that** the picture taking apparatus (1) furthermore comprises a multiplexing circuit (6), a hashing circuit of the chip card carrying out the hashing of at least a first fraction (F1(VN)) of the digital data originating from the picture taking apparatus (8) in such a way as to generate a first hashed datum (m1) and the first hashed datum (m1) is decrypted in the decryption circuit in such a way as to generate a signature (D(m1)_{K1}) of the first hashed datum (m1), the signature (D(m1)_{K1}) emanating from the chip card and the digital data (VN) being transmitted to the multiplexing circuit (6) in such a way as to constitute a multiplexed signal (S1).

6. Device according to Claims 1 to 5, **characterized in that** the picture taking apparatus (1, 8) is a camera head.

7. Device according to Claims 1 to 5, **characterized in that** the picture taking apparatus (1, 8) is a photographic apparatus.

## Patentansprüche

1. Vorrichtung zum Authentifizieren der Aufnahme von durch digitale Daten gebildeten Bildern, mit einem Aufnahmegerät (1, 8) und einem Sicherheitselement, das die Signatur von mindestens einem Teil der digitalen Daten realisiert, **dadurch gekennzeichnet, dass** das Sicherheitselement ein abnehmbares Element (2, 9) mit einer Entschlüsselungsschaltung mit Geheimschlüssel K1 ist, wobei das abnehmbare Element (2, 9) und der zugeordnete Geheimschlüssel K1 einem Benutzer eigen sind, wobei dieses Element sich über eine in dem Aufnahmegerät vorgesehene Schnittstellenschaltung (7) an das Aufnahmegerät anschließt.

2. Vorrichtung nach Anspruch 1, **dadurch gekennzeichnet, dass** in das abnehmbare Element (2, 9) eine Hash-Schaltung eingebunden ist.

3. Vorrichtung nach einem der Ansprüche 1 und 2, **dadurch gekennzeichnet, dass** das abnehmbare Element (2, 9) eine Chipkarte ist.

4. Vorrichtung nach den Ansprüchen 1 und 3, **dadurch gekennzeichnet, dass** das Aufnahmegerät (1) zusätzlich eine Multiplexschaltung (6) und eine Schaltung (5) zum Hashen von mindestens einem ersten Anteil (F1 (VN)) der digitalen Daten derart, dass ein erstes gehashtes Datum (m1) erzeugt wird, aufweist, wobei die Entschlüsselungsschaltung mit Geheimschlüssel K1 der Chipkarte (2) die Entschlüsselung des ersten gehashten Datums (m1) derart realisiert, dass eine Signatur (D(m1)_{K1}) des ersten gehashten Datums (m1) erzeugt wird, wobei die Signatur (D(m1)_{K1}) und die digitalen Daten (VN) an die Multiplexschaltung (6) derart übertragen werden, dass ein gemultiplextes Signal (S1) gebildet wird.

5. Vorrichtung nach den Ansprüchen 2 und 3, **dadurch gekennzeichnet, dass** das Aufnahmegerät (1) zusätzlich eine Multiplexschaltung (6) aufweist, wobei eine Hash-Schaltung der Chipkarte das Hashen von mindestens einem ersten Anteil (F1 (VN)) der digitalen, aus dem Aufnahmegerät (8) stammenden Daten derart realisiert, dass ein erstes gehashtes Datum (m1) erzeugt wird und das erste gehashte Datum (m1) in der Entschlüsselungsschaltung derart entschlüsselt wird, dass eine Signatur (D(m1)_{K1}) des ersten gehashten Datums (m1) erzeugt wird, wobei die aus der Chipkarte stammende Signatur (D(m1)_{K1}) und die digitalen Daten (VN) an die Multiplexschaltung (6) derart übertragen werden, dass ein gemultiplextes Signal (S1) gebildet wird.

6. Vorrichtung nach den Ansprüchen 1 bis 5, **dadurch gekennzeichnet, dass** das Aufnahmegerät (1, 8) ein Kamerakopf ist.

7. Vorrichtung nach den Ansprüchen 1 bis 5, **dadurch gekennzeichnet, dass** das Aufnahmegerät (1, 8) ein Fotoapparat ist.
